# EUROPÄISCHE PATENTSCHRIFT

(11) **EP 0 407 814 B1**
(45) Veröffentlichungstag und Bekanntmachung des Hinweises auf die Patenterteilung: **02.08.1995**
(21) Anmeldenummer: 90112200.2
(22) Anmeldetag: 27.06.1990
(51) Int. Cl.: C08F 246/00, C08F 216/12

(54) **Vernetzte Triazinpolymerisate und ihre Verwendung als Vernetzungsmittel**
Cured polymers of triazine and their use as curing agent
Polymères de triazine réticulés et leur utilisation comme réticulant

(30) Priorität: 08.07.1989 DE 3922498
(43) Veröffentlichungstag der Anmeldung: 16.01.1991
(73) Patentinhaber: BAYER AG, 51368 Leverkusen (DE)
(72) Erfinder: Lindner, Christian, Dr., D-5000 Köln 91 (DE); Piejko, Karl-Erwin, Dr., D-5060 Bergisch Gladbach 2 (DE)

(56) Entgegenhaltungen:
- US-A- 2 510 503
- US-A- 3 049 517
- WPI, FILE SUPPLIER, AN=68-69893P [00], Derwent Publications Ltd, London, GB; & JP-A-41 016 179
- PATENT ABSTRACTS OF JAPAN, Band 6, Nr. 261 (C-141)[1139], 21. Dezem & JP-A-57 155 208

## Beschreibung

Die Erfindung betrifft vernetzte Polymerisate auf der Basis von Triazinen Die Polymerisate eignen sich zur Herstellung von Duromeren oder Elastomeren und führen zur Bildung eines heterogenen Netzwerkes in diesen Materialien.

Vernetzte Polymere (z.B. Duromere) stellen eine bedeutende Kunststoffklasse dar und zeichnen sich gegenüber unvernetzten Polymeren (z.B. Thermoplasten) durch besondere Eigenschaften (z.B. Härte oder Wärmeformbeständigkeit) aus.

Vernetzte Polymere können einerseits durch Härtung aus unvernetzten Polymeren erhalten werden, die zur Vernetzung fähige Strukturelemente enthalten. Andererseits werden direkt vernetzte Produkte erhalten, wenn bereits während der Herstellung der Polymere Vernetzungsmittel zugesetzt werden.

Bekannte Vernetzungsmittel für radikalisch härtende Polymerisate sind z.B. polyfunktionelle Vinyl- oder Allylmonomere oder höhermolekulare ungesättigte, lösliche Polymere (z.B. unges. Polyester).

So ist es in den Schriften DE-A-2 256 301 und EP-A-50 265 die Zugabe von geringen Mengen einer Polyallylverbindung als Vernetzungsmittel zu Herstellung schlagzäher thermoplastischer Kunststoffe beschrieben.

Überraschend wurde gefunden, daß vernetzte Polymerisate auf der Basis von Triazinen mit einem hohen Gehalt an Triazinen selbst als Vernetzungsmittel wirken können.

Die Vernetzungsdichte, die Vernetzungsart und die Größe bestimmter Bereiche im Polymernetzwerk kann durch die erfindungsgemäßen vernetzten Polymerisate vorgegeben werden. Die Vernetzung weiterer Bereiche des Polymers kann separat durch die Reaktionsbedingungen bei der Umsetzung des vernetzten Polymerisats mit anderen Monomeren eingestellt werden. Es lassen sich somit gezielt Polymere mit besonderen Netzwerkstrukturen darstellen (beispielsweise mit von Bereich zu Bereich variierenden Netzbogenlängen oder besonderer Verteilung der Netzbogenlängen).

Gegenstand der Erfindung sind vernetzte Polymerisate mit ethylenisch ungesättigten Gruppen, die eine Jodzahl (nach Kaufmann) von 15 bis 200, bevorzugt von 50 bis 180 aufweisen aus
A) von 11 bis 60 Gew.-%, bevorzugt von 20 bis 50 Gew.-%, besonders bevorzugt von 25 bis 50 Gew.-% 1,3,5-triazin der Formel (I) 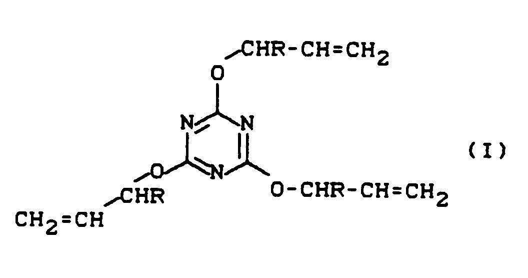 worin
   R Wasserstoff, CH₃, C₂H₅ bedeutet
   und
B) von 89 bis 40 Gew.-%, bevorzugt von 80 bis 50 Gew.-%, besonders bevorzugt von 75 bis 50 Gew.-% wenigstens eines Vinylmonomeren.

Geeignete Vinylmonomere B) sind vorzugsweise Styrol, p-Methylstyrol, Halogenstyrol, Chlormethylstyrol, α-Methylstyrol, Acrylnitril, Meth-acrylnitril, C₁-C₈-Alkylacrylat, C₁-C₈-Alkylmethacrylat, Vinylacetat, Vinylpropionat, N-Vinylpyrrolidon, Butadien, Isopren, Maleinsäureanhydrid, Maleinsäureimide, Vinylchlorid, Acrylsäure, Methacrylsäure, Acrylamid, Methacrylamid, besonders bevorzugt sind Styrol, C₁-C₈-Alkylacrylate, C₁-C₈-Alkylmethacrylate und Acrylnitril.

Bevorzugte vernetzte Polymerisate werden erhalten aus Triazinen der Formel I und einer Mischung aus wenigstens zwei olefinisch ungesättigten Monomeren, wie Styrol und Acrylnitril oder Styrol und C₁-C₈-Alkylacrylat oder Styrol und C₁-C₈-Methacrylat. Besonders bevorzugte Polymerisate werden erhalten aus Triazinen der Formel I und einer Mischung aus wenigstens zwei olefinisch ungesättigten Monomeren wie Styrol und Acrynitril oder Styrol und C₁-C₈-Alkylacrylat oder Styrol und C₁-C₈-Methacrylat mit nicht mehr als 50 Gew.-% Styrolmonomere, bezogen auf die Gewichtssumme der Komponenten A) und B).

Die erfindungsgemäßen Polymerisate können durch Emulsionspolymerisation in kontinuierlichem oder diskontinuierlichem Verfahren hergestellt werden.

Geeignete anionische Emulgatoren sind beispielsweise aliphatische, höhere Fettsäuren, organische Sulfonsäuren oder Schwefelsäurehalbester. Geeignete nichtionische Emulgatoren sind z.B. polyethoxylierte Phenolderivate oder aliphatische polyethoxylierte Polyetherblockpolymere.

Geeignete Radikalinitiatoren sind Peroxide, Persäuren, Hydroperoxide Persulfate, Perphosphate sowie bekannte Redoxinitiatoren. Besonders geeignete Initiatoren sind wasserlösliche anorganische Salze wie Kaliumperoxodisulfat, -peroxodiphosphat.

Die Copolymerisation der Monomere A) und B) kann so durchgeführt werden, daß der gewichtsmäßige Monomerumsatz zum Copolymer größer oder gleich 97 Gew.-%, bevorzugt größer oder gleich 99 Gew.-%, beträgt.

Die erfindungsgemäßen vernetzten Polymerisate sind hochvernetzt und weisen Gelgehalte größer 90 Gew.-% auf. Die erfindungsgemäßen Polymerisate sind teilchenförmig Ihr Teilchendurchmesser (d₅₀) (ermittelt durch Lichtstreuungsmessungen) beträgt von 0,05 bis 1 »m, bevorzugt von 0,06 bis 0,3 »m.

Aufgrund des ungäsattigten Charakters der erfindungsgemäßen Polymerisate (eingebaute ethylenisch ungesättigte Gruppen) sind sie in der Lage beispielsweise Iod zu addieren. Aus diesen Gründen ist auch ein guter Nachweis des Olefingruppengehaltes durch Iod-Titrationsmethoden möglich. Die erfindungsgemäßen Polymerisate weisen eine Jodzahl (nach Kaufmann) von 15 bis 200, bevorzugt von 50 bis 180 auf.

Die erfindungsgemäßen Polymerisate weisen nur einen Typ von ungesättigtem Strukturelement auf und besitzen aufgrund dieses speziellen, durch den Einbau der Monomere A) erhaltenen Typs Vinyl-Doppelbindung eine besondere thermische Stabilität.

Die vernetzten Polymerisate können aus der Emulsion isoliert werden, z.B. durch Koagulation mit Hilfe von anorganischen Salzen, Säuren oder Basen und durch Erhöhung oder Erniedrigung der Temperatur. Die Polymerisate fallen dabei - nach Trocknung - zumeist als Pulver an.

Die erfindungsgemäßen Polymerisate können als Vernetzungsmittel bei radikalischen Polymerisation eingesetzt werden.

Ein weiterer Gegenstand der Erfindung ist die Verwendung der erfindungsgemäßen vernetzten Polymerisate zur Herstellung von vernetzten Kunststoffen.

Kunststoffe, die unter Verwendung der erfindungsgemäßen vernetzten Polymerisate erzeugt wurden, weisen vorteilhafte Schrumpfeigenschaften auf und besitzen eine bessere Korrelation von Härte, Steifigkeit und Stabilität gegenüber praxisnaher Schlagbeanspruchung.

Zur Definition und Analyse von Netzwerkstrukturen (Vernetzungsdichte, Netzbogenlänge) siehe M. Hoffmann et al. Polymeranalytik I und II, Georg Thieme Verlag, Stuttgart 1977.

### Beispiele

Als Triazinmonomer I wurde in den Beispielen 2,4,6-Tris(2-propenyloxy)-1,3,5-triazin verwendet, hier abgekürzt mit TAC.

Außerdem wurden folgende Monomere in den Beispielen eingesetzt:

| Monomer | Abkürzung |
|---|---|
| n-Butylacrylat | nBA |
| Styrol | S |
| Acrylnitril | ACN |
| Methylmethacrylat | MMA |

### Versuchsreihe A)

### Herstellung der Copolymerisate

In einem Reaktor werden vorgelegt:
2.000 Gew.-Teile Wasser und
5 Gew.-Teile Na-Salz von C₁₄-C₁₆-Alkylsulfonsäuren

Nach Aufheizen auf 70°C und Zugabe einer Initiatorlösung aus 5 Gew.-Teilen Kaliumperoxodisulfat in 100 Gew.-Teilen Wasser gibt man innerhalb von 5 Stunden 1.500 Gew.-Teile einer Monomerlösung und getrennt eine Emulgatorlösung aus 1.000 Gew.-Teilen Wasser und 25 Gew.-Teile Na-Salz von C₁₄-C₁₆-Alkylsulfonsäuren hinzu Anschließend wird innerhalb von 4 Stunden bei 70°C auspolymerisiert.

Analog zu dieser Vorschrift wurden die folgenden Versuche (A1 - A8) mit den in Tabelle 1 wiedergegebenen Monomermischungen durchgeführt.

**Tabelle 1**

| Versuchs-Nr. | Zusammensetzung der Monomermischungen (Gew.-Teile, Monomer) | |
|---|---|---|
| A 1 (Vergleichsversuch) | 1350 | nBA |
| | 150 | S |
| A 2 (Vergleichsversuch) | 1200 | nBA |
| | 150 | S |
| | 150 | TAC |
| A 3 | 1125 | nBA |
| | 150 | S |
| | 225 | TAC |
| A 4 | 1050 | nBA |
| | 150 | S |
| | 300 | TAC |
| A 5 | 950 | nBA |
| | 150 | S |
| | 400 | TAC |
| A 6 | 850 | nBA |
| | 150 | S |
| | 500 | TAC |
| A 7 | 750 | nBA |
| | 150 | S |
| | 600 | TAC |
| A 8 | 720 | S |
| | 280 | ACN |
| | 500 | TAC |

Nach erfolgter Polymerisation fielen Emulsionen an, die einen Polymerfeststoffgehalt von 32 Gew.-% aufwiesen; über Lichtstreuung wurde der mittlere Teilchendurchmesser (d₅₀) der Produkte aus den Versuchen A 1 bis A 8 ermittelt. Es ergab sich:

| Produkt nach Versuchs-Nr. | mittlerer Teilchendurchmesser (d₅₀) [nm] |
|---|---|
| A 1 | 60 |
| A 2 | 79 |
| A 3 | 72 |
| A 4 | 65 |
| A 5 | 67 |
| A 6 | 77 |
| A 7 | 70 |
| A 8 | 83 |

Die Produkte wurden durch Koagulation mit wäßriger MgSO₄-Lösung bei ca. 70°C als Pulver isoliert.

Die Polymere wurden anschließend filtriert, gewaschen und getrocknet.

Die isolierten Polymere zeigten folgende Eigenschaften:

| Produkt aus Versuchs-Nr. | Iodzahl (n. Kaufmann) | Gelgehalt (Gew.-%) | N-Gehalt (Gew.-%) |
|---|---|---|---|
| A 1 | - | - | - |
| A 2 | - | 98 | 1,59 |
| A 3 | 18,8 | 97 | 2,41 |
| A 4 | 19,2 | 96 | 3,18 |
| A 5 | 32,7 | 95 | 4,28 |
| A 6 | 41,6 | 93 | 5,32 |
| A 7 | 67,8 | 91 | 6,40 |
| A 8 | 70,0 | 91 | - |

Auffallend ist unter anderem der fallende Gelgehalt der Polymerisate mit zunehmender TAC-Einbaumenge, was auf eine Förderung des Gehaltes nicht eincopolymerisierter C=C-Doppelbindungen durch steigende TAC-Mengen schließen läßt - zugleich unter Unterdrückung einer steigenden Vernetzung. Zur Kontrolle der Copolmerzusammensetzung wurden die Copolymere aus den Versuchen A 1 bis A 8 eine Stunde in Toluol extrahiert und dann isoliert. Die anfallenden Produkte besaßen identische Stickstoffgehalte, was den chemischen Einbau des TAC bestätigt.

### Versuchsreihe B)

Zur Verwendung des Polymerisats als Vernetzungsmittel wurde das Polymerisat aus Versuchs-Nr. A 5 per Ultraschalldispergierung bei Raumtemperatur in Methylmethacrylat (MMA) dispergiert. Es wurden folgende Mischungen erzeugt:

| Versuchs-Nr. | Zusammensetzung (Gew.-Teile) | |
|---|---|---|
| | MMA | A 5 |
| B 1 (Vergleichsversuch) | 50 | - |
| B 2 | 50 | 0,5 |
| B 3 | 50 | 2,5 |
| B 4 | 50 | 5 |
| B 5 | 50 | 7,5 |
| B 6 | 50 | 10 |

Die milchigen, flüssigen Mischungen wurden weiter untersucht.

Die Mischungen B 1 - B 6 wurden mit 0,5 Gew.-% Azo-bis-isobutyronitril versetzt, entgast und bei 60°C 3 Stunden polymerisiert. Anschließend wurde 24 Stunden bei 80°C auspolymerisiert. Die Polymerisate wurden mit siedendem Toluol behandelt (65 ml Toluol/g) und der Gelanteil anschließend abgetrennt. In der folgenden Tabelle sind der Gelanteil (trocken), der Quellungsindex (in %) an A 5 in der erfindungsgemäßen Mischung aufgeführt:

| Versuchs-Nr. | A 5-Gehalt der Ausgangsmischung (in %) | Gelanteil des Endpolymerisat (in %) | Quellungsindex des Gelanteils |
|---|---|---|---|
| B 1 | - | - | - |
| B 2 | 1,0 | 5,3 | nicht bestimmt |
| B 3 | 4,8 | 30 | 15 |
| B 4 | 9,1 | 42 | 16 |
| B 5 | 13,0 | 59 | 15 |
| B 6 | 16,7 | 65 | 8 |

Man erkennt, daß ein zunehmender Anteil an erfindungsgemäßem ungesättigten Polymerisat in der polymerisierbaren Mischung den Vernetzungsgrad im Endpolymer erhöht.

Die Korrelation zwischen Gelanteil, Quellungsindex und Vernetzungsmittelkonzentration läßt auf eine besondere Netzwerkstruktur schließen.

## Patentansprüche

1. Teilchenförmige vernetzte Polymerisate mit ethylenisch ungesättigten Gruppen, die eine Jodzahl von 15 bis 200 und einen mittleren Teilchendurchmessern (d₅₀) von 0,05 bis 1 »m) aufweisen, bestehend aus
A) von 11 bis 60 Gew.-% 2,4,6-Tris-(2-propenyloxy)-1,3,5-triazin der Formel (I) 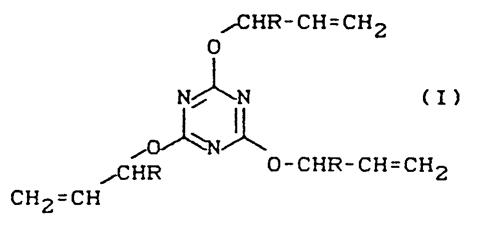 worin
R Wasserstoff, CH₃ oder C₂H₅ bedeutet
und
B) von 89 - 40 Gew.-% wenigstens eines Vinylmonomeren.

2. Polymerisate entsprechend Anspruch 1 in denen als Vinylmonomere B) Styrol, p-Methylstyrol, Halogenstyrol, Chlormethylstyrol, α-Methylstyrol, Acrylnitril, Methacrylnitril, C₁-C₈-Alkyl acrylat, C₁-C₈-Alkylmethacrylat, Vinylacetat, Vinylpropionat, N-Vinylpyrrolidon, Butadien, Isopren, Maleinsäureanhydrid, Maleinsäureimide, Vinylchlorid, Acrylsäure, Methacrylsäure, Acrylamid und Methacrylamid eingesetzt werden.

3. Verwendung der Polymerisate nach Anspruch 1 als Vernetzungsmittel zur Herstellung von vernetzten Kunststoffen.

## Claims

1. Particulate crosslinked polymers having ethylenically unsaturated groups, that have an iodine value of 15 to 200 and a median particle diameter (d₅₀) of 0.05 to 1 »m, consisting of
A) from 11 to 60 % by weight of 2,4,6-tris(2-propenyloxy)-1,3,5-triazine of the formula (I) 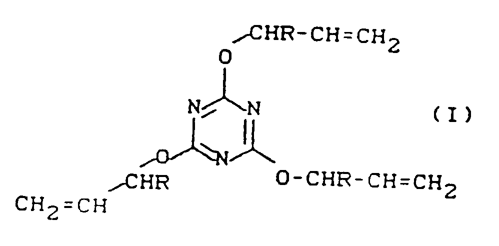 wherein
R denotes hydrogen, CH₃ or C₂H₅
and
B) from 89 to 40 % by weight of at least one vinyl monomer.

2. Polymers according to Claim 1 in which styrene, p-methylstyrene, halostyrene, chloromethylstyrene, α-methylstyrene, acrylonitrile, methacrylonitrile, C₁-C₈-alkyl acrylate, C₁-C₈-alkyl methacrylate, vinyl acetate, vinyl propionate, N-vinylpyrrolidone, butadiene, isoprene, maleic anhydride, maleimides, vinyl chloride, acrylic acid, methacrylic acid, acrylamide and methacrylamide are used as vinyl monomers B.

3. Use of the polymers according to Claim 1 as crosslinking agents for the production of crosslinked plastics.

## Revendications

1. Polymères réticulés en particules, contenant des groupes à insaturation éthylénique, ayant un indice d'iode de 15 à 200 et un diamètre de particule moyen d₅₀ de 0,05 à 1 »m, consistant en
A) 11 à 60 % en poids de 2,4,6-tris-(2-propényloxy)-1,3,5-triazine de formule (I): 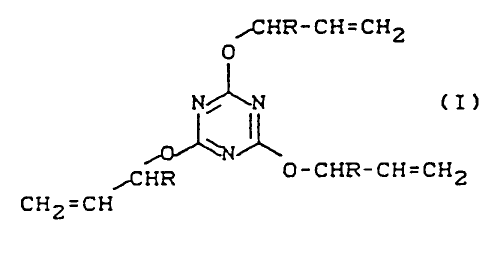 dans laquelle
R représente l'hydrogène, CH₃ ou C₂H₅, et
B) 89 à 40 % en poids d'au moins un monomère vinylique.

2. Polymères selon la revendication 1, à la préparation desquels on a utilisé en tant que monomères vinyliques B) le styrène, le p-méthylstyrène, un halogénostyrène, le chlorométhylstyrène, l'α-méthylstyrène, l'acrylonitrile, le méthacrylonitrile, un acrylate d'alkyle en C₁ à C₈, un méthacrylate d'alkyle en C₁ à C₈, l'acétate de vinyle, le propionate de vinyle, la N-vinylpyrrolidone, le butadiène, l'isoprène, l'anhydride maléique, un maléimide, le chlorure de vinyle, l'acide acrylique, l'acide méthacrylique, l'acrylamide ou le méthacrylamide.

3. Utilisation des polymères selon la revendication 1 en tant qu'agents réticulants pour la préparation de résines synthétiques réticulées.
